# FASCICULE DE BREVET EUROPEEN

(11) **EP 1 437 258 B1**
(45) Date de publication et mention de la délivrance du brevet: **25.10.2006**
(21) Numéro de dépôt: 03292991.1
(22) Date de dépôt: 01.12.2003
(51) Int. Cl.: B60Q 1/115, B60Q 1/08

(54) **Système de commande de l'orientation en site d'un projecteur de véhicule et procédé de mise en oeuvre**
Vorrichtung und Verfahren zur Einstellung der Neigung eines Fahrzeugscheinwerfers
Elevation adjustment device for vehicle headlamp and the method thereof

(30) Priorité: 09.12.2002 FR 0215875
(43) Date de publication de la demande: 14.07.2004
(73) Titulaire: VALEO VISION, 93012 Bobigny Cédex (FR)
(72) Inventeur: Albou, Pierre, 75013 Paris (FR); Leleve, Joël, 93800 Epinay sur Seine (FR)

(56) Documents cités:
- EP-A- 1 201 498
- DE-A- 19 602 005
- US-A- 5 359 666
- US-A- 6 144 159

## Description

### Domaine de l'invention

L'invention concerne un système pour commander l'orientation en site d'un projecteur de véhicule assurant un éclairage constant de la route, quelle que soit l'assiette du véhicule. L'invention concerne également un procédé permettant de mettre en oeuvre ce système de commande.

L'invention trouve des applications dans le domaine des véhicules circulant sur routes comme, par exemple, les véhicules automobiles ou les véhicules poids lourds. Elle trouve, en particulier, des applications dans le domaine de la projection de lumière par ces véhicules sur la route.

### Etat de la technique

Actuellement, tous les véhicules roulant sur la route comportent un dispositif d'éclairage de la route utilisé particulièrement la nuit ou lors d'intempéries. Classiquement, il existe sur les véhicules automobiles deux types d'éclairages : un éclairage dit «de route » qui éclaire la route intégralement sur une longue distance et un éclairage dit «de croisement » qui éclaire la route sur une courte distance pour éviter d'éblouir les conducteurs des véhicules susceptibles de venir en sens inverse. L'éclairage de route est réalisé au moyen de projecteurs de route qui envoient chacun un faisceau lumineux dirigé vers l'horizon. L'éclairage de croisement est réalisé au moyen de projecteurs de croisement, appelés aussi codes, qui envoient chacun une nappe de lumière descendante donnant une visibilité sur une distance de l'ordre de 60 à 80 mètres.

Dans le cas de l'éclairage de croisement, la portée de l'éclairage est ajustée en orientant les projecteurs dans le plan vertical. Classiquement, l'orientation du faisceau lumineux émis par les projecteurs de croisement est réglée par des spécialistes, en particulier des mécaniciens automobiles, en fonction d'une indication donnée par le constructeur du dispositif d'éclairage. L'angle d'orientation du faisceau lumineux est donné par le constructeur en pourcent de radiant. Cet angle d'orientation des faisceaux lumineux est donné pour un véhicule dans une position standard. On appelle «position standard » du véhicule, la position dans laquelle le châssis du véhicule est sensiblement parallèle à la route, c'est-à-dire que l'angle que forme le châssis du véhicule avec le plan horizontal est plat. On dit alors que l'assiette du véhicule est plate.

Cependant, on sait que l'assiette du véhicule peut être modifiée en fonction de la situation dans laquelle se trouve le véhicule (accélération, freinage, etc.) et en fonction de la charge du véhicule. En effet, lorsque le véhicule est très chargé, alors l'arrière du véhicule est abaissé, ce qui implique que l'avant du véhicule est relevé. Le véhicule n'est donc plus parallèle à la route. On dit familièrement qu'il «lève le nez ». Dans ce cas, les faisceaux lumineux des projecteurs de croisement du véhicule sont dirigés vers l'horizon, au lieu d'être dirigés vers la route. Ils peuvent alors éblouir les conducteurs de véhicules venant en sens inverse.

Au contraire, lorsque le véhicule est en train de freiner, alors l'avant du véhicule bascule vers la route. Le véhicule n'est donc plus parallèle à la route. On dit familièrement qu'il «pique du nez ». Dans ce cas, les faisceaux lumineux des projecteurs de croisement éclairent la route juste devant le véhicule. Le conducteur du véhicule n'a alors plus une visibilité suffisante pour pouvoir appréhender la situation.

On comprend ainsi que le réglage initial des projecteurs de croisement, réalisé pour un véhicule en position standard, n'est pas correct dès lors que l'assiette du véhicule n'est plus plate, c'est-à-dire lorsque le véhicule lève le nez ou pique du nez.

Pour résoudre cet inconvénient, certains véhicules sont équipés d'un système de correction automatique fixé sur le châssis du véhicule. Ce système de correction automatique comporte des capteurs placés sur les essieux avant et arrière du véhicule et qui mesurent chacun la différence de hauteur entre la position de la roue et le châssis, en fonction de la charge du véhicule. Un petit calculateur, intégré dans le système de correction automatique, permet de déterminer l'assiette du véhicule et de donner des informations à de petits moteurs qui orientent le projecteur. Cependant, ce système présente des inconvénients. En effet, les capteurs sont placés prés des roues, c'est-à-dire à des endroits difficilement accessibles par l'homme ou le robot lors de la fabrication du véhicule. Ainsi, l'opération de mise en place des capteurs, lors de la fabrication du véhicule, nécessite une grande précision et, par conséquent, un investissement en temps et en argent important. De plus, ces capteurs sont situés à des endroits soumis aux projections d'eau, de gravillons et autres éléments pouvant se trouver sur la route. La connectique de ces capteurs, et les capteurs eux-mêmes, doivent donc être robustes pour supporter ces projections.

On connaît par ailleurs des documents EP-A-1 201 498, FR-A-2 730 201 et US-A-6 144 159 des dispositifs de correction automatique de l'orientation en site des projecteurs d'un véhicule automobile lors des variations d'assiette de ce dernier, en émettant des points lumineux sur la route et en mesurant la distance séparant les images de ces points sur un capteur.

On connaît enfin du document US 5 359 666 un dispositif de reconnaissance en temps réel du contour de la route sur laquelle roule un véhicule à l'aide d'une caméra de télévision. Un traitement d'images consistant à déterminer les fuyantes dans la moitié basse et dans la moitié haute de l'image, puis à calculer leurs intersections, permet de reconnaître le profil de la route : droit, courbe, montée ou descente.

### Exposé de l'invention

L'invention a justement pour but de remédier aux inconvénients du système décrit précédemment. A cette fin, l'invention propose un système intelligent pour commander l'orientation en site des projecteurs d'un véhicule, à partir d'une caméra montée dans le projecteur, en fonction de l'assiette du véhicule. Ce système consiste à fixer une caméra sur le réflecteur du projecteur (ou, de façon plus générale, à la rendre solidaire du réflecteur) pour filmer la route qui s'étend devant le véhicule. Une unité de traitement d'images assure le traitement d'images successives (par exemple d'au moins deux) afin de déterminer une ligne d'horizon mesurée de la scène de route située devant le véhicule. Une ligne d'horizon de consigne a préalablement été déterminée lors d'un réglage initial du projecteur. La ligne d'horizon réelle est ensuite rapprochée de la ligne d'horizon de consigne, en modifiant l'orientation du projecteur, jusqu'à ce que l'écart entre la ligne mesurée et la ligne de consigne tende vers zéro.

De façon plus précise, l'invention concerne un système de commande de l'orientation en site d'un projecteur de véhicule muni d'une source lumineuse fixée sur un réflecteur mobile, caractérisé en ce qu'il comporte une caméra fixée sur le réflecteur mobile effectuant des prises d'images d'une scène de route se déroulant devant le véhicule,et connectée à une unité de traitement d'images qui détermine une ligne d'horizon mesurée de la scène de route pour la comparer avec une ligne d'horizon de consigne prédéterminée, déterminer un écart entre la ligne d'horizon mesurée et la ligne d'horizon de consigne, et régler l'orientation du projecteur pour que l'écart entre la ligne d'horizon mesurée et la ligne d'horizon de consigne tende vers zéro.

L'invention concerne aussi un procédé de commande de l'orientation en site d'un projecteur de véhicule, caractérisé en ce qu'il comporte les opérations suivantes :
- prises d'images successives d'une scène de route se déroulant devant le véhicule,
- traitement d'au moins une image de la scène de route et obtention d'une image traitée,
- détermination, à partir de cette image traitée, d'une ligne d'horizon mesurée de la scène de route,
- comparaison de cette ligne d'horizon mesurée avec une ligne d'horizon de consigne prédéterminée et détermination d'un écart entre la ligne d'horizon mesurée et la ligne d'horizon de consigne,
- réglage de l'orientation du projecteur pour que l'écart entre la ligne d'horizon mesurée et la ligne d'horizon de consigne tende vers zéro.

### Brève description des dessins

La figure 1 représente un projecteur de véhicule muni du système de commande selon l'invention.
La figure 2A représente un exemple d'image d'une scène de route située devant un véhicule.
La figure 2B représente l'image de la figure 2A après avoir été traitée.
Les figures 3A et 3B représentent schématiquement deux cas d'éclairage sur la route des figures 2A et 2B.
Les figures 4, 5 et 6 montrent des cas particuliers dans lesquels le procédé de l'invention peut aussi être mis en oeuvre.
Les figures 7A et 7B montrent un mode de réalisation de l'invention, dans lequel le système comporte un générateur de lignes lumineuses.

### Description détaillée de modes de réalisation de l'invention

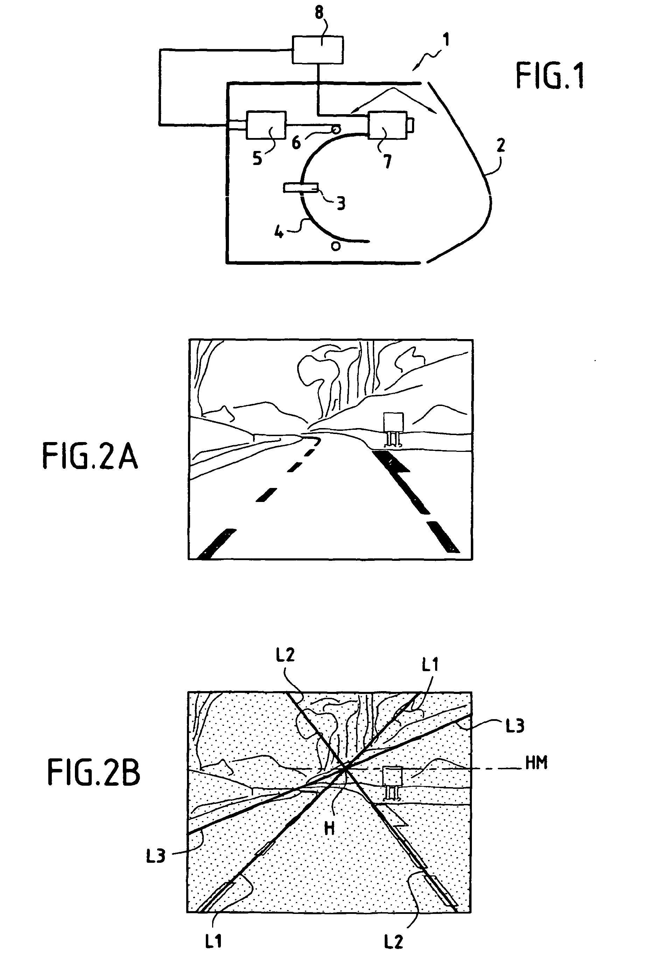

La figure 1 représente un projecteur de croisement d'un véhicule, muni d'un système de commande d'orientation conforme à l'invention. Plus précisément, cette figure 1 montre un projecteur 1 muni d'une optique 2 (glace de fermeture du projecteur et éventuellement d'autres pièces à rôle optique du type lentille) et d'une source de lumière 3 montée sur un support mobile 4. Ce support mobile 4 est le réflecteur du projecteur. Ce réflecteur 4 est actionné par un moteur 5 associé à un dispositif de rotation 6, tel qu'une rotule. A l'intérieur du projecteur 1, on a représenté, par des flèches, les mouvements de rotation du réflecteur 4 et, notamment, de la source de lumière 3 solidaire du réflecteur 4. Cette source de lumière 3 peut être une source de lumière classique pour un projecteur de véhicule. De même, le réflecteur 4, l'optique 2, le moteur 5 et le dispositif de rotation 6 peuvent être des éléments classiques dans un projecteur de croisement de véhicule.

Sur ce réflecteur 4, est également montée une caméra 7, solidaire du réflecteur 4. Cette caméra 7 peut donc être déplacée angulairement en même temps que le réflecteur 4 et la source d'éclairage 3.

La caméra 7 est, de préférence, adaptée à la prise de vue de nuit. Ce peut être, par exemple, une caméra infrarouge.

La caméra 7 réalise des prises de vues instantanées et successives de la scène de route se déroulant devant le véhicule. Elle transmet ensuite ces prises de vues, ou images, à une unité de traitement d'images 8. Cette dernière est également connectée au moteur 5 qui commande l'orientation du projecteur en fonction des informations reçues de l'unité de traitement d'images 8.

Comme cela sera expliqué en détail par la suite, l'unité de traitement d'images 8 effectue un traitement sur au moins deux des images successives transmises par la caméra. Ce traitement a pour but de déterminer une ligne d'horizon mesurée de la scène de route et de la comparer à une ligne de consigne. La ligne d'horizon mesurée est la ligne d'horizon déterminée pour la scène de route considérée. La ligne d'horizon de consigne est une ligne d'horizon prédéterminée lors d'une étape de réglage initiale du projecteur. Autrement dit, la ligne d'horizon de consigne est déterminée de la même façon que la ligne d'horizon mesurée, mais dans des conditions initiales idéales, comme par exemple lors de la mise en circulation du véhicule ou lors d'un contrôle de routine du véhicule. Cette ligne de consigne est donc déterminée par un professionnel, pour un véhicule dont l'assiette est plate.

Comme on le verra en détail par la suite, l'invention propose justement de mesurer la ligne d'horizon réelle du véhicule et de la ramener sur la ligne d'horizon de consigne, préalablement déterminée.

Dans le mode de réalisation de la figure 1, l'unité de traitement 8 comporte un microcalculateur. C'est ce microcalculateur qui détermine l'écart entre les lignes d'horizon mesurée et de consigne ainsi que les déplacements à faire subir au réflecteur. Dans un autre mode de réalisation de l'invention, c'est le calculateur propre au véhicule qui est utilisé pour déterminer cet écart et ces déplacements. L'unité de traitement d'images est alors connectée à ce calculateur, qui est lui-même connecté au moteur 5.

Le traitement des images prises par la caméra 7 va maintenant être décrit en détail, à partir d'exemples d'images. En particulier, les figures 2A et 2B montrent, respectivement, une image naturelle et une image traitée d'un exemple de scène de route se déroulant devant un véhicule.

La figure 2A représente une image prise par la caméra 7 et appelée image naturelle, par opposition à l'image traitée montrée sur la figure 2B. La figure 2B montre la même scène de route que l'image 2A, mais après traitement par l'unité de traitement d'images 8. Dans un mode de réalisation de l'invention, ce traitement comporte les opérations suivantes :

Au moins deux des images naturelles de la scène de route prises par la caméra sont transmises à l'unité de traitement d'images. Ces images peuvent être deux images successives.

L'unité de traitement 8 effectue une comparaison entre ces deux images naturelles. Selon un mode de réalisation du procédé de l'invention, cette comparaison est une soustraction d'une des images par rapport à l'autre. Cette soustraction permet de retirer les zones constantes, c'est-à-dire les zones qui sont identiques sur la première et sur la seconde images. Autrement dit, l'image obtenue par soustraction des deux images naturelles permet de faire apparaître les zones qui ont bougé, c'est-à-dire les zones et tous les éléments liés à la vitesse du véhicule.

L'unité de traitement d'images 8 effectue ensuite un seuillage de l'image obtenue par soustraction. Ce seuillage consiste à supprimer tous les gris de l'image et à les remplacer par des blancs ou des noirs, en fonction des niveaux de gris initiaux. On obtient alors l'image traitée de la figure 2B.

Dans un autre mode de réalisation de l'invention, une seule image est traitée au moyen d'une transformée mathématique appliquée à chaque pixel de l'image ou à des ensembles de pixels de l'image. Cette transformée mathématique peut être, par exemple, la transformée de Hoegh.

Le procédé de l'invention propose ensuite d'étudier cette image et d'en rechercher les lignes fuyantes ainsi que les points de convergence de ces lignes fuyantes. Ces lignes fuyantes se rejoignent à l'horizon. On détermine ainsi quel est l'horizon mesuré de la scène de route, c'est-à-dire l'horizon réel pour la situation dans laquelle se trouve le véhicule, à l'instant considéré.

Sur la figure 2B, on a référencé L1, L2 et L3 les lignes fuyantes de l'image traitée. Ces lignes fuyantes se rejoignent en un point d'horizon H. On déduit, à partir de ce point H, l'emplacement de la ligne d'horizon de consigne HC, qui est horizontale et qui passe par ce point H.

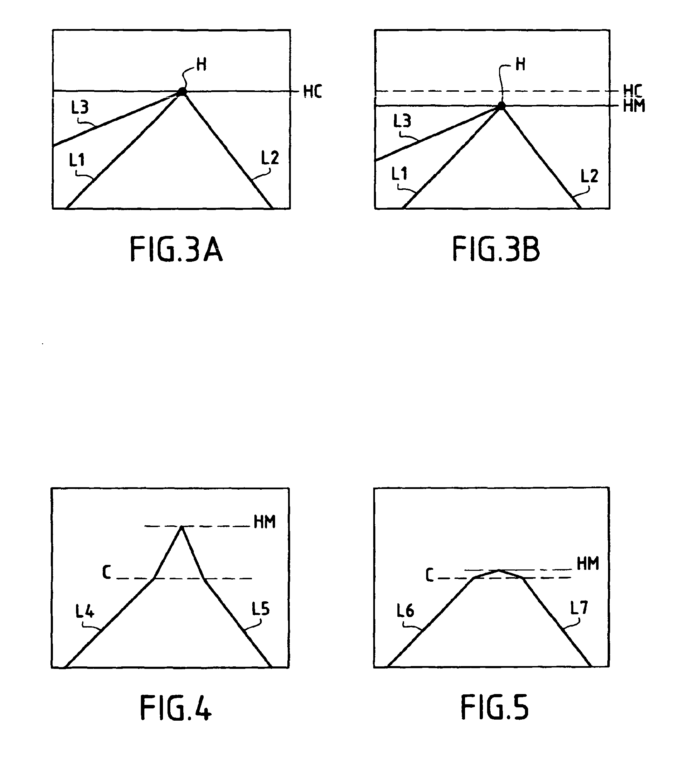

La figure 3A représente la même scène de route que celle de la figure 2B mais selon une représentation schématique. Cette figure 3A n'est pas une image réellement obtenue pendant le traitement d'images. C'est une figure uniquement destinée à mieux faire comprendre l'invention. Cette figure 3A montre les éléments importants relevés sur l'image de la figure 2B et, en particulier, les différentes lignes permettant d'appliquer la suite du procédé de l'invention. Ces lignes sont les lignes fuyantes L1, L2 et L3 qui se coupent au point d'intersection H. Par ce point H, passe la ligne d'horizon mesurée HM.

Le procédé de l'invention consiste ensuite à comparer la ligne d'horizon mesurée HM avec la ligne d'horizon de consigne HC prédéterminée. Dans le cas de la figure 3A, le ligne de consigne HC et la ligne mesurée HM sont confondues. On en déduit que le réglage du projecteur est correct et qu'aucune correction de l'orientation du projecteur n'est nécessaire.

Dans le cas de la figure 3B, on voit que la ligne mesurée HM et la ligne de consigne HC sont séparées par un écart E. Comme la ligne d'horizon mesurée est en dessous de la ligne de consigne, on en déduit que le véhicule «pique du nez».

En pratique, la ligne de consigne est déterminée comme étant située sur une des lignes de trame de la caméra. Ainsi, l'écart E est calculé en nombre de lignes de trame.

L'information relative à l'écart E est alors fournie au moteur 5 qui modifie l'orientation du projecteur en le relevant jusqu'à ce que la ligne d'horizon mesurée soit confondue avec la ligne de consigne. Autrement dit, on modifie l'inclinaison du projecteur et, en particulier de la source lumineuse, jusqu'à ce que l'écart E tende vers zéro. En pratique, l'écart E est converti en un signal de commande du moteur 5 pour revenir à la valeur de consigne de la ligne d'horizon.

En pratique, la vérification du positionnement de la ligne d'horizon mesurée sur la ligne de consigne se fait au moyen de la caméra, c'est-à-dire en visualisant, sur les images prises instantanément par la caméra, les deux lignes d'horizon HM et HC.

Le procédé de l'invention, tel qu'il vient d'être décrit, permet de garder constante la distance de visibilité, quelle que soit l'assiette du véhicule, en fournissant un faisceau lumineux orienté selon un angle constant par rapport à la route.

Ce procédé peut être mis en oeuvre dans un cas classique de route relativement plate, comme montré sur les figures 2 et 3. Il peut tout aussi bien être mis en oeuvre dans des cas plus particuliers, comme le fond d'une vallée ou le haut d'un sommet. Dans ces cas, le procédé est mis en oeuvre de la même façon qu'expliqué précédemment pour une route plate.

Sur la figure 4, on a représenté le cas particulier d'une route en fond de vallée. Ce cas est représenté d'une façon schématisée, comme l'étaient les exemples précédents des figures 3A et 3B. Le cas particulier schématisé par la figure 4 est le cas où le véhicule se trouve dans le fond d'une vallée et où il s'apprête à monter sur une colline ou une montagne. Dans cet exemple, la partie, qui est située en dessous de la ligne C en pointillés, montre la route qui se trouve dans le fond de la vallée et qui forme les lignes fuyantes L4 et L5. Au niveau de la ligne pointillée C, les lignes fuyantes L4 et L5 sont coupées, c'est-à-dire qu'elles forment un angle non plat avec les lignes fuyantes initiales. Cette coupure C des lignes fuyantes représente l'endroit où la route commence à monter, c'est-à-dire où la route présente une pente par rapport à la partie de route qui était plate dans le fond de la vallée. On voit d'après la figure 4, qu'il est possible de déterminer deux lignes d'horizon mesurées : Une ligne avec la partie des fuyantes située sous la coupure C et une ligne HM avec la partie des fuyantes située au-dessus de la coupure C. C'est cette dernière ligne d'horizon, c'est-à-dire celle mesurée dans la partie supérieure de l'image, que l'on prend en compte dans le cas d'un fond de vallée. Cette ligne d'horizon mesurée HM se détermine exactement de la même façon que dans le cas des figures 2 et 3.

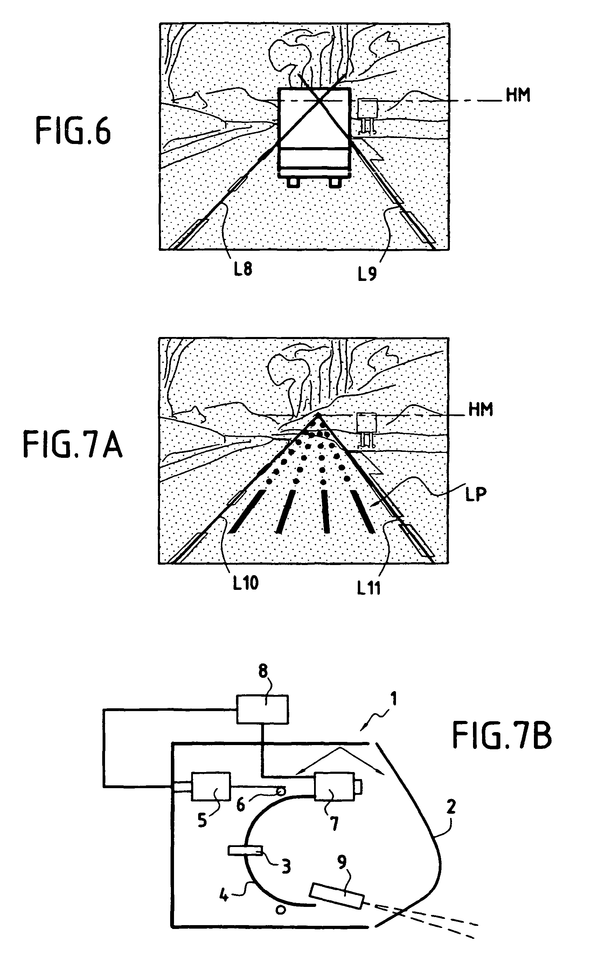

Sur la figure 5, on a représenté, de façon schématique, le cas particulier d'un véhicule au sommet d'une côte. Dans ce cas, le véhicule se trouve en haut d'une côte et est prêt à aborder une route plate ou une route en pente descendante. Comme on le voit sur la figure 5, les lignes fuyantes L6 et L7 de la route en côte se coupent au niveau de la ligne C. Comme dans le cas précédent, il est possible en théorie de déterminer deux lignes d'horizon mesurées : Une ligne avec la partie des fuyantes située sous la coupure C et une ligne HM avec la partie des fuyantes située au-dessus de la coupure C. En pratique, c'est la ligne d'horizon mesurée dans la partie supérieure de l'image que l'on prend en compte dans le cas d'un sommet de côte. Cette ligne d'horizon mesurée HM se détermine exactement de la même façon que dans le cas des figures 2 et 3.

On comprend ainsi que, quelle que soit la géométrie de la route sur laquelle circule le véhicule, c'est-à-dire rectiligne ou en pente, la ligne d'horizon est toujours déterminable à partir des lignes fuyantes. Et dès lors que la ligne d'horizon mesurée est déterminée, l'orientation du projecteur peut être commandée.

Sur la figure 6, on a représenté une situation particulière dans laquelle peut se trouver un véhicule. Cette situation est celle où un obstacle, comme un autre véhicule, et en particulier un véhicule de taille relativement imposante du type poids lourd, circule sur la route devant le véhicule considéré. La figure 6 montre l'image obtenue après traitement, dans une telle situation. On voit que, dans ce cas, le camion a gêné la prise d'images de la scène de route. Aussi, l'image obtenue après traitement ne comporte qu'une partie des lignes fuyantes L8 et L9. Cependant, avec cette partie des lignes fuyantes détectées, situées entre le camion et le véhicule, il est possible d'extrapoler la suite de ces lignes fuyantes. Ces lignes extrapolées sont représentées en pointillés sur la figure 6, dans le prolongement des lignes fuyantes L8 et L9. La ligne d'horizon mesurée HM peut ensuite être déterminée, à partir de ces lignes fuyantes extrapolées, de la même façon qu'expliqué précédemment. On réalise ainsi une correction réaliste de l'image.

Cependant, cette extrapolation en cas d'obstacle peut entraîner une réduction de la précision de l'orientation du projecteur. Pour éviter cela, il est possible de conjuguer la détermination de la ligne d'horizon mesurée avec l'émission d'un point lumineux ou d'une figure, par une source lumineuse repérable sur une image vidéo. Ce procédé consiste, en effet, à émettre un dessin lumineux spécifique non visible à l'oeil nu pour le conducteur, mais repérable par la caméra soit par sa haute luminosité, soit grâce à une modulation particulière comme un clignotement. Cette source lumineuse peut être, par exemple, une source de rayons laser. Dans ce cas, la source lumineuse est montée dans le projecteur de façon à être solidaire du réflecteur mobile. Elle émet un faisceau qui contribue à la restitution des lignes fuyantes. De cette façon, l'orientation du projecteur est règlée en fonction d'une information prenant en compte, d'une part, l'écart E et, d'autre part, la forme du dessin spécifique. Cette information peut être obtenue par des calculs géométriques ou par les connaissances d'un réseau de neurones ayant effectué son apprentissage lors de séquences de visibilité sans obstacle.

Le dessin spécifique peut être, en particulier, un faisceau de lignes parallèles émis, par exemple, par un réseau de diffraction ou par une conjugaison de lentilles. Ce cas peut être mis en oeuvre en présence d'un obstacle ou bien dans des conditions de circulation difficiles comme un trafic dense. On a représenté sur la figure 7A un exemple d'image traitée d'une scène de route, dans le cas où sont projetées des lignes parallèles. Cette figure 7A montre les lignes fuyantes L10 et L11 ainsi que les lignes projetées LP qui, sur l'image traitée, forment des segments de fuyantes qui contribuent, avec les lignes fuyantes L10 et L11, à déterminer la ligne d'horizon mesurée. La précision de la détermination de la ligne d'horizon est proportionnelle au nombre de lignes parallèles. De préférence, ces lignes parallèles sont émises pour être proches du véhicule, par exemple à quelques mètres devant le véhicule, afin de ne pas être altérées par la présence des véhicules précédents.

La figure 7B représente le système de l'invention dans le cas où il comporte des moyens pour émettre des lignes lumineuses parallèles. Ce système comporte des éléments identiques à ceux décrits dans la figure 1. Il comporte en plus un générateur de lignes lumineuses 9 monté sur le réflecteur mobile 4. De préférence, ce générateur de lignes lumineuses 9 est fixé à l'extrémité du réflecteur qui est opposée à la caméra 7. Ce générateur de lignes lumineuses est dirigé vers l'avant proche du véhicule et orienté de façon à ce que les lignes lumineuses soient placées entre les lignes fuyantes L10 et L11.

Le système de l'invention qui vient d'être décrit peut être mis en oeuvre dans un véhicule équipé d'un ordinateur de bord. L'unité de traitement d'images 8 peut alors être intégrée dans l'ordinateur de bord du véhicule. Dans ce cas, il suffit d'intégrer, dans l'ordinateur de bord, un logiciel adéquat permettant d'effectuer le traitement d'images à partir des images issues de la caméra et de commander le moteur qui actionne le réflecteur du projecteur. Le coût de ce système de commande est alors quasi imperceptible pour le constructeur. Dans le cas contraire, une unité de traitement d'images, incluant ou non un microcalculateur, peut être ajoutée dans le véhicule.

Le système de l'invention peut aussi être associé à un GPS et à un système de cartographie pour connaître les variations verticales du sol et ainsi anticiper les commandes des projecteurs.

## Revendications

1. Système de commande de l'orientation en site d'un projecteur de véhicule (1) muni d'une source lumineuse (3) fixée sur un réflecteur mobile (4), **caractérisé en ce qu'**il comporte une caméra (7) fixée sur le réflecteur mobile effectuant des prises d'images d'une scène de route se déroulant devant le véhicule,et connectée à une unité de traitement d'images (8) qui détermine une ligne d'horizon mesurée (HM) de la scène de route pour la comparer avec une ligne d'horizon de consigne (HC) prédéterminée, déterminer un écart (E) entre la ligne d'horizon mesurée et la ligne d'horizon de consigne, et régler l'orientation du projecteur pour que l'écart entre la ligne d'horizon mesurée et la ligne d'horizon de consigne tende vers zéro.

2. Système de commande selon la revendication 1, **caractérisé en ce que** la caméra est montée à une extrémité du réflecteur.

3. Système de commande selon l'une quelconque des revendications 1 et 2, **caractérisé en ce que** la caméra est une caméra infrarouge.

4. Système de commande selon l'une quelconque des revendications 1 à 4, **caractérisé en ce qu'**il comporte un générateur (9) de lignes lumineuses.

5. Procédé de commande de l'orientation en site d'un projecteur de véhicule, **caractérisé en ce qu'**il comporte les opérations suivantes :
- prises d'images d'une scène de route se déroulant devant le véhicule par une caméra fixée sur un réflecteur mobile du projecteur,
- traitement d'au moins une image de la scène de route,
- détermination, à partir d'au moins cette image traitée, d'une ligne d'horizon mesurée(HM) de la scène de route,
- comparaison de cette ligne d'horizon mesurée avec une ligne d'horizon de consigne (HC) prédéterminée et détermination d'un écart (E) entre la ligne d'horizon mesurée et la ligne d'horizon de consigne,
- réglage de l'orientation du projecteur pour que l'écart entre la ligne d'horizon mesurée et la ligne d'horizon de consigne tende vers zéro.

6. Procédé de commande selon la revendication 5, **caractérisé en ce que** l'opération de traitement d'image consiste à traiter au moins deux images pour en déduire une image traitée.

7. Procédé de commande selon la revendication 6, **caractérisé en ce que** l'opération de traitement de deux images consiste à soustraire une image de l'autre.

8. Procédé de commande selon la revendication 7, **caractérisé en ce que** l'opération de traitement de deux images consiste à réaliser un seuillage sur l'image obtenue après soustraction.

9. Procédé de commande selon l'une quelconque des revendications 5 à 8, **caractérisé en ce que** l'opération de détermination d'une ligne d'horizon mesurée consiste à déterminer des lignes fuyantes, dans l'image traitée, et à en déduire la ligne d'horizon.

10. Procédé de commande selon l'une quelconque des revendications 5 à 9, **caractérisé en ce que** la ligne d'horizon de consigne est déterminée à partir des lignes fuyantes, dans une image traitée, lors d'un réglage initial des projecteurs.

11. Procédé de commande selon l'une quelconque des revendications 5 à 10, **caractérisé en ce que** l'écart entre la ligne d'horizon mesurée et la ligne d'horizon de consigne correspond à un nombre de trames de la caméra.

12. Procédé de commande selon l'une quelconque des revendications 5 à 11, **caractérisé en ce que** la ligne d'horizon de consigne est extrapolée en fonction des lignes fuyantes.

13. Procédé de commande selon l'une quelconque des revendications 5 à 12, **caractérisé en ce que** des lignes lumineuses sont émises par le projecteur formant, sur l'image traitée, des segments de fuyantes.

14. Projecteur de véhicule comportant un réflecteur mobile actionné par un moteur et une source lumineuse fixée sur le réflecteur, **caractérisé en ce qu'**une orientation en site du projecteur est commandée par le système de commande selon l'une quelconque des revendications 1 à 4.

## Claims

1. A control system for controlling the horizontal orientation of a vehicle headlight (1) having a light source (3) fixed on a movable reflector (4), **characterised in that** it includes a camera (7) which is fixed on the movable reflector for capturing images of a road scene unrolling in front of the vehicle, and which is connected to an image processing unit (8) which determines a measured horizon line (HM) of the road scene, whereby to compare it with a predetermined datum horizon line (HC), to determine a spatial interval (E) between the measured horizon line and the datum horizon line, and to adjust the orientation of the headlight in such a way that the interval between the measured horizon line and the datum horizon line tends towards zero.

2. A control system according to Claim 1, **characterised in that** the camera is mounted at one end of the reflector.

3. A control system according to Claim 1 or Claim 2, **characterised in that** the camera is an infra-red camera.

4. A control system according to any one of Claims 1 to 4 *[sic],* **characterised in that** it includes a generator (9) of lines of light.

5. A method of controlling the horizontal orientation of a vehicle headlight, **characterised in that** it includes the following operations:-
- capturing images of a road scene unrolling in front of the vehicle by means of a camera which is fixed on a movable reflector of the headlight,
- processing at least one image of the road scene,
- determining, from at least the said processed image, a measured horizon line (HM) of the road scene,
- comparing the said measured horizon line with a predetermined datum horizon line (HC), and determining a spatial interval (E) between the measured horizon line and the datum horizon line, and
- adjusting the orientation of the headlight so that the interval between the measured horizon line and the datum horizon line tends towards zero.

6. A method of control according to Claim 5, **characterised in that** the operation of processing the image consists in processing at least two images to produce a processed image therefrom.

7. A method of control according to Claim 6, **characterised in that** the operation of processing two images consists in subtracting one image from the other.

8. A method of control according to Claim 7, **characterised in that** the operation of processing two images consists in performing a rectification on the image obtained after subtraction.

9. A method of control according to any one of the preceding Claims, **characterised in that** the operation of determining a measured horizon line consists in determining receding lines in the processed image, and deducing the horizon line therefrom.

10. A method of control according to any one of Claims 5 to 9, **characterised in that** the datum horizon line is determined from the receding lines, in a processed image, in an initial adjustment of the headlights.

11. A method of control according to any one of Claims 5 to 10, **characterised in that** the interval between the measured horizon line and the datum horizon line corresponds to a number of frames of the camera.

12. A method of control according to any one of Claims 5 to 11, **characterised in that** the datum horizon line is extrapolated as a function of the receding lines.

13. A method of control according to any one of Claims 5 to 12, **characterised in that** the lines of light are emitted by the headlight, forming segments of receding lines on the processed image.

14. A vehicle headlight comprising a movable reflector actuated by a motor, and a light source fixed on the reflector, **characterised in that** a horizontal orientation of the headlight is controlled by the control system according to any one of Claims 1 to 4.

## Patentansprüche

1. Vorrichtung zum Einstellen der Höhenausrichtung eines Kraftfahrzeugscheinwerfers (1), der mit einer an einem beweglichen Reflektor (4) befestigten Lichtquelle (3) versehen ist,
**dadurch gekennzeichnet, dass** sie umfasst
eine an dem beweglichen Reflektor angebrachten Kamera (7), die Aufnahmen von einem vor dem Fahrzeug liegenden Fahrbahnausschnitt macht und mit einer Bildverarbeitungseinheit (8) verbunden ist, die eine gemessene Horizontlinie (HM) des Fahrbahnausschnitts bestimmt, um diese mit einer vorbestimmten Horizontsolllinie (HC) zu vergleichen, eine Abweichung (E) zwischen der gemessenen Horizontlinie (HM) und der Horizontsolllinie (HC) zu bestimmen und die Ausrichtung des Scheinwerfers einzustellen, damit die Abweichung zwischen der gemessenen, Horizontlinie und der Horizontsolllinie gegen Null tendiert.

2. Stellvorrichtung nach Anspruch 1,
**dadurch gekennzeichnet, dass** die Kamera an einem Ende des Reflektors angebracht ist.

3. Stellvorrichtung nach einem der Ansprüche 1 oder 2,
**dadurch gekennzeichnet, dass** die Kamera eine Infrarot-Kamera ist.

4. Stellvorrichtung nach einem der Ansprüche 1 bis 3,
**dadurch gekennzeichnet, dass** sie einen Lichtliniengenerator (9) umfasst.

5. Verfahren zum Einstellen der Höhenausrichtung eines Kraftfahrzeugscheinwerfers, das die folgenden Schritte umfasst:
- Aufnehmen eines vor dem Fahrzeug liegenden Fahrbahnausschnitts mit einer an einem beweglichen Reflektor des Scheinwerfers befestigten Kamera,
- Verarbeiten wenigstens eines Bildes des Fahrbahnausschnitts,
- Bestimmen einer gemessenen Horizontlinie (HM) des Fahrbahnausschnitts anhand wenigstens dieses verarbeiteten Bildes,
- Vergleichen dieser gemessenen Horizontlinie mit einer vorbestimmten Horizontsolllinie (HC) und Bestimmen einer Abweichung (E) zwischen der gemessenen Horizontlinie und der Horizontsolllinie,
- Einstellen der Scheinwerferausrichtung, damit die Abweichung zwischen der gemessenen Horizontlinie und der Horizontsolllinie gegen Null tendiert.

6. Einstellverfahren nach Anspruch 5,
**dadurch gekennzeichnet, dass** der Bildverarbeitungsschritt in der Verarbeitung von wenigstens zwei Bildern besteht, um daraus ein verarbeitetes Bild abzuleiten.

7. Einstellverfahren nach Anspruch 6,
**dadurch gekennzeichnet, dass** die Verarbeitung von zwei Bildern darin besteht, ein Bild vom anderen zu subtrahieren.

8. Einstellverfahren nach Anspruch 7,
**dadurch gekennzeichnet, dass** die Verarbeitung von zwei Bildern darin besteht, einen Schwellenwerlvergleich an dem nach Subtraktion erhaltenen Bild auszuführen.

9. Einstellverfahren nach einem der Ansprüche 5 bis 8,
**dadurch gekennzeichnet, dass** die Bestimmung einer gemessenen Horizontlinie darin besteht, Fluchtlinien in dem verarbeiteten Bild zu bestimmen und daraus die Horizontlinie abzuleiten.

10. Einstellverfahren nach einem der Ansprüche 5 bis 9,
**dadurch gekennzeichnet, dass** die Horizontsolllinie anhand von Fluchtlinien in einem verarbeiteten Bild bei einem erstmaligen Einstellen der Scheinwerfer bestimmt wird.

11. Einstellverfahren nach einem der Ansprüche 5 bis 10,
**dadurch gekennzeichnet, dass** der Unterschied zwischen der gemessenen Horizontlinie und der Horizontsolllinie einer Anzahl von Rasterlinien der Kamera entspricht.

12. Einstellverfahren nach einem der Ansprüche 5 bis 11,
**dadurch gekennzeichnet, dass** die Horizontsolllinie in Abhängigkeit von den Fluchtlinien extrapoliert wird.

13. Einstellverfahren nach einem der Ansprüche 5 bis 12,
**dadurch gekennzeichnet, dass** die Lichtlinien von dem Scheinwerfer ausgesandt werden und hierbei in dem verarbeiteten Bild Fluchtlinienabschnitte bilden.

14. Kraftfahrzeugscheinwerfer mit einem durch einen Motor betätigten beweglichen Reflektor und einer auf dem Reflektor befestigten Lichtquelle,
**dadurch gekennzeichnet, dass** ein Einstellen der Höhenausrichtung des Scheinwerfers durch die Stellvorrichtung nach einem der Ansprüche 1 bis 4 erfolgt.
